Europäisches Patentamt

European Patent Office

Office européen des brevets

(11) Veröffentlichungsnummer: **0 291 821 B1**

(19)

(12) **EUROPÄISCHE PATENTSCHRIFT**

(45) Veröffentlichungstag der Patentschrift: **25.03.92**

(51) Int. Cl.⁵: **A61C 9/00**

(21) Anmeldenummer: **88107475.1**

(22) Anmeldetag: **10.05.88**

(54) **Sockel zur Halterung des Gipsmodelles eines Zahnkranzes.**

(30) Priorität: **14.05.87 DE 3716143**

(43) Veröffentlichungstag der Anmeldung:
**23.11.88 Patentblatt 88/47**

(45) Bekanntmachung des Hinweises auf die
Patenterteilung:
**25.03.92 Patentblatt 92/13**

(84) Benannte Vertragsstaaten:
**DE FR IT**

(56) Entgegenhaltungen:
EP-A- 0 030 312     DE-A- 3 420 991
DE-A- 3 436 094     DE-A- 3 505 680
DE-A- 3 521 137     DE-U- 7 141 244
US-A- 2 659 106     US-A- 3 937 773

(73) Patentinhaber: **Baumann, Karsten**
**Senderstrasse 5**
**W-7130 Mühlacker(DE)**

(72) Erfinder: **Gopon, Günter**
**Flughafenstrasse 7**
**W-7500 Karlsruhe 31(DE)**

(74) Vertreter: **TER MEER - MÜLLER - STEINMEI-
STER & PARTNER**
**Artur-Ladebeck-Strasse 51**
**W-4800 Bielefeld 1(DE)**

## Beschreibung

Die Erfindung betrifft einen Sockel zur Halterung des Gipsmodells eines Zahnkranzes bei der Anfertigung von Zahnersatzteilen, mit einem Boden, einer vom Rand des Bodens aufragenden, umlaufenden, an die Form des Zahnkiefers angepaßten Außenwand sowie innerhalb der Außenwand vom Boden aufragenden, im wesentlichen der Form eines Zahnkiefers folgenden Führungselementen zur lösbaren Aufnahme eines zersägbaren Gipsmodells. Ein derartiger Sockel ist aus der DE-A-35 05 680 bekannt.

Der vorgesehene Sockel findet Anwendung bei der Herstellung von Zahnersatzteilen jeglicher Art wie Kronen, Einlagen, Brücken und Gebißprothesen aus Kunststoff, Keramik und Metallen.

Sockel zur Halterung des aus Gips von einem aus Silikon-Kautschuk bestehenden Abdruckes des Zahnkranzes eines Patienten sind in verschiedenen Ausführungformen bereits bekannt. Bei der Herstellung umfangreicher Zahnersatzteile bedarf es der Herstellung eines Modelles der Zähne des Oberkiefers und des Unterkiefers, damit das einwandfreie Zusammenwirken des Ersatzteiles mit dem vorhandenen Gebiß gewährleistet werden kann. Hierzu werden die Gipsmodelle beider Kiefer in einen sogenannten Artikulator, welcher die Kieferbewegung simuliert, eingesetzt, damit eine laufende Überprüfung der Höhe und der Ausbildung der Kauflächen im Detallabor erfolgen kann.

Die DE-A-35 05 680 schlägt einen Sockel für Gipsmodelle vor, bei dem das Gipsmodell durch einen U-förmigen, von einer Platte aufragenden Steg gehalten und geführt wird. Nach dem Zersägen des Gipsmodells besitzen dessen einzelne Abschnitte, die einem oder mehreren Zähnen entsprechen können, keine eindeutige Position In bezug auf den Steg. Ein sicheres Reponieren ist daher nicht möglich.

Die EP-A-030 312 zeigt einzelne Stifte, die zunächst an einer Platte aus formstabilem Material verankert werden, indem Löcher in die Platte gebohrt und die Stifte in die Löcher eingesetzt werden. Die Platte soll vorzugsweise aus transparentem Material bestehen, damit die Bohrlöcher von Fall zu Fall entsprechend der Gebißgröße und den zu behandelnden Zähnen angezeichnet und gebohrt werden können.

Aus der DE-A-34 36 094 ist eine Sockelplatte bekannt, die eine Vielzahl von Bohrungen aufweist, in die nach Bedarf zylindrische oder runde Führungselemente eingedruckt werden können. Die Herstellung dieses Sockels ist jedoch recht aufwending. Er kann nur zusammen mit einer entsprechend ausgebildeten Peilplatte benutzt werden, und seine Handhabung ist umständlich. Da die Führungselemente zum Verbleiben im Gebißmodell bzw. in dessen Teilen ausgebildet und vorgesehen sind, treten Probleme auf, wenn zum Ausgießen Keramikmasse verwendet wird, die im Ofen gebrannt werden soll.

Nach der US-A-39 37 773 werden zunächst sogenannte "retainer" in eine Basis aus gießfähigem Harz eingebettet. Diese "retainer" weisen parallele, zylindrische Löcher auf, in die Führungsstifte eingesetzt werden können. Diese Führungsstifte besitzen an den außerhalb der Löcher liegenden Enden erweiterte Kopfstücke, die im weiteren Verlauf in die Masse der Zahnmodelle eingebettet werden. Nach dem Aufsägen und Herausnehmen der Modellabschnitte verbleiben die Führungsstifte an den Modellabschnitten, so daß die Gefahr besteht, daß die Führungsstifte bei Brennvorgängen schmelzen.

Der Erfindung liegt die Aufgabe zugrunde, einen Sockel zur lösbaren Halterung eines Gipsmodells eines Zahnkranzes bzw. von dessen abgetrennten Gipsteilen zu schaffen, der eine exakte und unverwechselbare Positionierung der herausgelösten Teile erlaubt, der besonders einfach zu handhaben ist und bei dessen Benutzung weder im Gips des Modells noch in den Modellteilen irgendwelche der Halterung dienenden Elemente verbleiben müssen.

Diese Aufgabe wird dadurch gelöst, daß als Führungselemente wenigstens zwei U-förmig gekrümmte und zur Innenseite der Außenwand sowie untereinander parallele Reihen von im Abstand einander folgenden, konischen Stiften vorgesehen sind.

Vorteilhafte Ausbildungen der Erfindung ergeben sich aus den Unteransprüchen.

Der zum Sockel passend konzipierte Abgußkasten ermöglicht die einfache Herstellung eines zweiten Gipsmodelles bzw. eines Keramik-Modelles.

Die Erfindung wird nachstehend an einem Ausführungsbeispiel unter Bezugnahme auf die beigefügten Zeichnungsblätter näher erläutert. Es zeigen

Fig. 1    einen Sockel zur Halterung eines Gipsmodelles eines Zahnkranzes in einer perspektivischen Darstellung, von oben gesehen, in etwas vergrößertem Maßstab;

Fig. 2    die Unterseite des Sockels nach Figur 1, in einer perspektivischen Darstellung;

Fig. 3    einen zum Sockel gehörenden Abgußkasten, ebenfalls perspektivisch dargestellt, von unten betrachtet;

Fig. 4    den Abgußkasten gemäß Figur 3 mit einem eingesetzten Kern, in einem Querschnitt;

Fig. 5    den Sockel nach den Figuren 1 und 2 mit einem aufgesetzten Abgußkasten gemäß Figuren 3 und 4 , in einem Querschnitt.

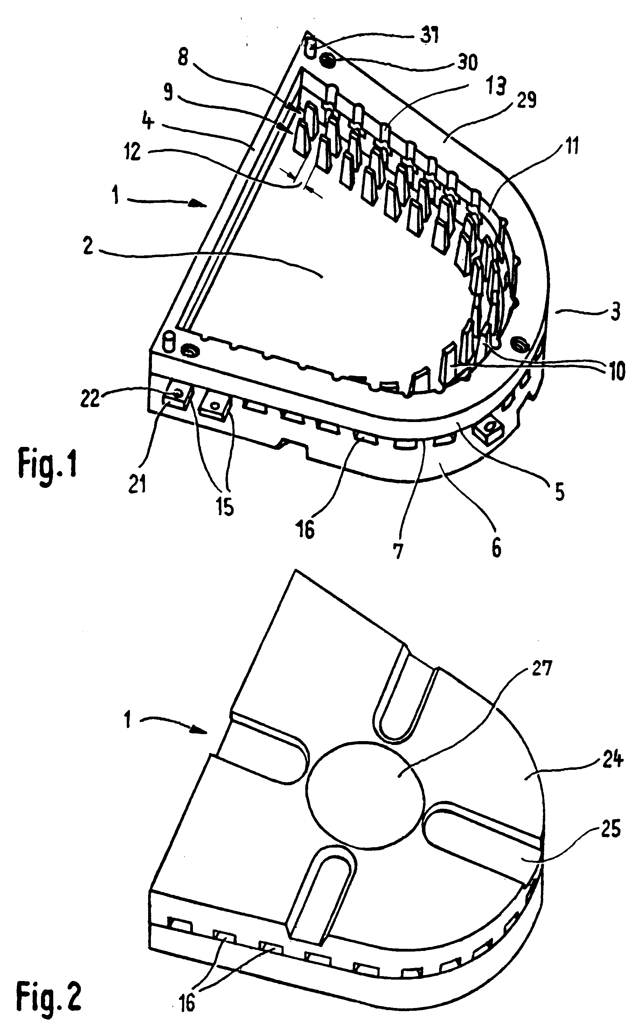

Der in den Figuren 1 und 2 wiedergegebene Sockel 1 dient zur Halterung eines Gipsmodelles eines Zahnkranzes bei der Anfertigung von Zahnersatzteilen jeglicher Art. Dieser Sockel 1 besteht aus Metall, beispielsweise aus Aluminium, und weist einen ebenen Boden 2 mit einer ringsumlaufenden Außenwand 3 auf. Diese Außenwand 3 besitzt einen U-förmigen Grundriß und ist der Form des Zahnkiefers angepaßt; eine gerade Rückwand 4 schließt den bogenförmigen Teil der Außenwand 3 ab.

Die Außenwand 3 ist zweiteilig ausgebildet und weist demgemäß ein Oberteil 5 sowie ein am Boden 2 angeformtes Unterteil 6 auf, wobei die Trennfläche 7 von Oberteil 5 und Unterteil 6 eben ist und parallel zum Boden 2 verläuft. Das Oberteil 5 ist mit (nicht dargestellten) Schrauben am Unterteil 6 lösbar befestigt und kann deshalb bei Bedarf abgenommen werden.

Auf dem Boden 2 des Sockels 1 sind zwei U-förmig gekrümmte Reihen 8 und 9 von konisch ausgebildeten Stiften 10 als Führungselemente für das abnehmbare Gipsmodell bzw. dessen abgesägte Teile angeordnet. Die erste dieser Reihen 8 steht parallel zur Innenseite 11 der Außenwand 3, und die zweite Reihe 9 steht parallel zur ersten Reihe 8.

Die Stifte 10 der beiden Reihen 8 und 9 sind gegeneinander versetzt und auf Lücke angeordnet. Die lichten Abstände 12 zwischen den Stiften 10 sind unterschiedlich, sie betragen im Bereich der größten Krümmung der Reihen 8 und 9 etwa fünf Millimeter, während sie zu deren Enden hin rund sieben Millimeter betragen.

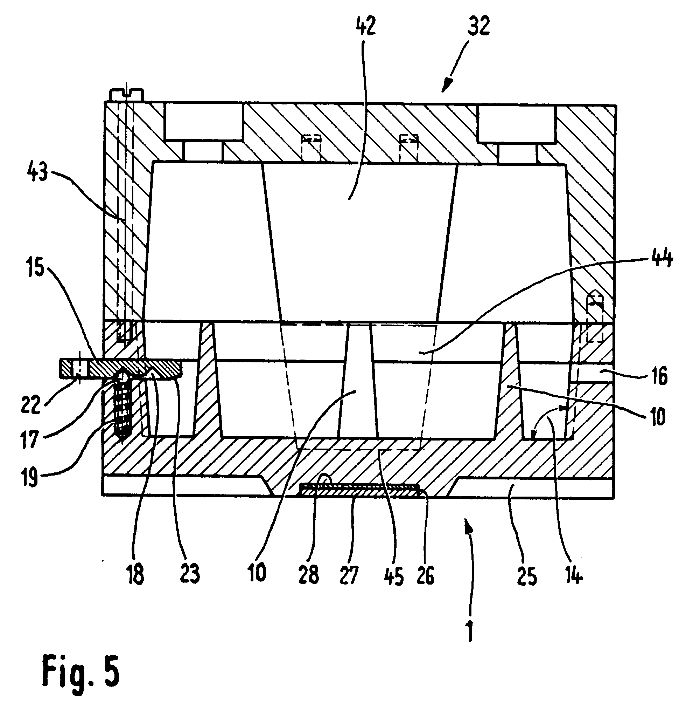

Die Außenwand 3 des Sockels 1 ist an ihrer Innenseite 11 mit parallel zueinander liegenden Führungsnuten 13 von etwa halbkreisförmigen Querschnitt versehen, welche senkrecht zum Boden 2 stehen. Die Innenseite 11 der Außenwand 3 steht - vgl. Figur 5 - in einem Winkel 14 von etwas mehr als neunzig Grad zum Boden 2.

Die Außenwand 3 trägt entlang ihres U-förmig gebogenen Teiles eine Anzahl von Riegel 15, welche in Richtung zu den Stiften 10 und parallel zum Boden 2 verschiebbar angeordnet sind. Diese Riegel 15 sind flach quaderförmig ausgebildet und sie sind in entsprechenden, ebenfalls quaderförmigen Ausnehmungen 16 der Außenwand 3 verschiebbar. Die Trennfläche 7 zwischen Oberteil 5 und Unterteil 6 der Außenwand 3 verläuft durch diese Ausnehmungen 16 hindurch.

An jedem Riegel 15 greift (siehe Figur 5) ein Rastelement 17 in Gestalt einer Stahlkugel an, welches in der Außenwand 3 angeordnet ist. Jeder Riegel 15 trägt an seiner zum Boden 2 weisenden Seite zwei nebeneinander liegende, durch eine kleine Rinne miteinander verbundene Vertiefungen 18, in die das Rastelement 17 (die Kugel) eingreift, das unter der Einwirkung einer vorgespannten Feder 19 steht, die in einer Sackbohrung 20 des Unterteiles 6 der Außenwand 3 liegt.

Die Riegel 15 tragen an ihren freien Außenenden 21 kreisförmige Öffnungen 22, und an den gegenüberliegenden, zu den Stiften 10 weisenden Enden an der zum Boden 2 gerichteten Seite eine Schräge 23.

An der Unterseite 24 des Bodens 2 des Sockels 1 sind (vgl. Figur 2) vier Paßnuten 25 vorgesehen, die einen trapezförmigen Querschnitt aufweisen. Diese Paßnuten 25 besitzen ein halbkreisförmiges Ende und sie sind unter Zentriwinkeln von jeweils neunzig Grad angeordnet. In einer Vertiefung 26 (siehe Figur 5) des Bodens 2 ist eine kreisförmige Platte 27 aus einem ferromagnetischen Material eingelassen und dort mittels eines Klebers 28 befestigt.

In der Krone 29 der Außenwand 3 sind drei Gewindelöcher 30 vorgesehen und es stehen dort auch zwei Paßstifte 31 hervor.

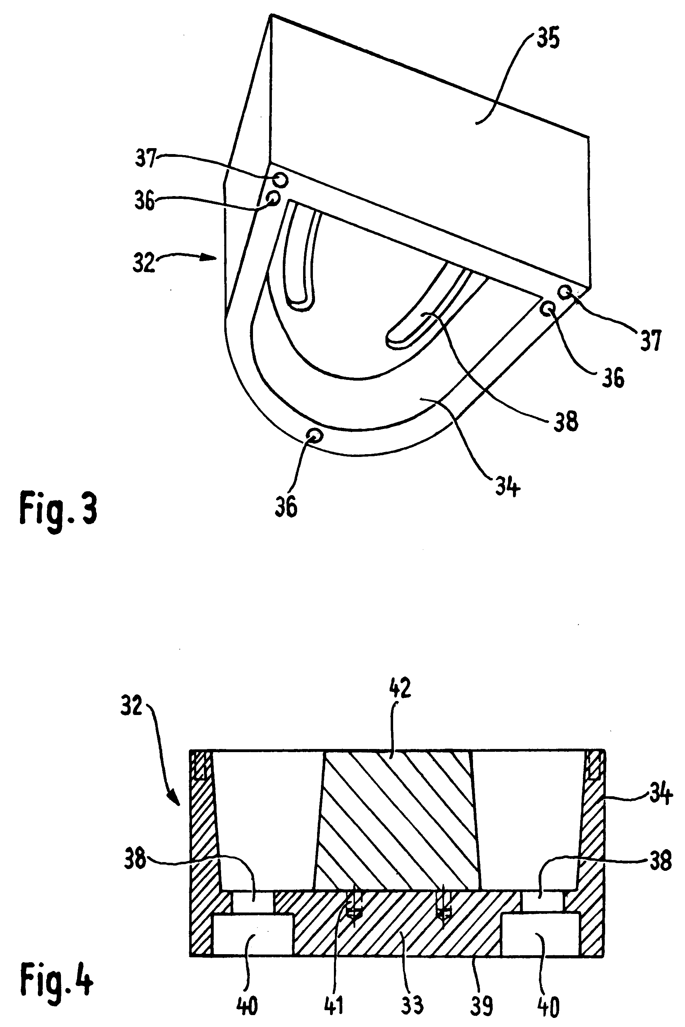

Auf den Sockel 1 ist ein Abgußkasten 32 (siehe Figur 3) aufsetzbar. Dieser Abgußkasten 32 besitzt eine dem Sockel 1 entsprechende Form mit einem angeformten Deckel 33, mit einer im Grundriß U-förmigen Seitenwand 34 und mit einer geraden Abschlußwand 35. Der Abgußkasten 32 ist (wie Figur 5 verdeutlicht) mit seiner Seitenwand 33 auf die Krone 29 der Außenwand 3 des Sockels 1 aufsetzbar.

Die Seitenwand 34 des Abgußkastens 32 weist drei mit den Gewindelöchern 30 der Außenwand 3 des Sockels 1 fluchtende Durchgangslöcher 36 sowie zwei Paßbohrungen 37 auf, in welche die Paßstifte 31 bei auf den Sockel 1 aufgesetztem Abgußkasten 32 eingreifen.

Im Deckel 33 des Abgußkastens 32 sind zwei Einfüllöffnungen 38 für eine eingießbare Abgußmasse vorhanden, die an der Außenseite 39 des Deckels 33 Erweiterungen 40 tragen.

Im Abgußkasten 32 befindet sich ein mit Steckbolzen 41 ausgestatteter Kern 42.

Der Abgußkasten 32 ist mit Hilfe von Kopfschrauben 43 (in Figur 5 angedeutet), welche die Durchgangslöcher 36 durchsetzen und in die Gewindebohrungen 30 eingedreht sind, am Sockel 1 befestigbar.

Die Handhabung des vorgeschlagenen Sockels 1 ist denkbar einfach. Nachdem in den vom Zahnarzt am Patienten hergestellten, aus Silikon-Kautschuk bestehenden Abdruck des Gebisses Modellgips eingefüllt worden ist, wird der Sockel 1 mit seinen Stiften 10 in den noch flüssigen Gips eingedrückt und die Riegel 15 vorgeschoben. Nach dem Aushärten des Gipses und dem Entfernen des Abdruckes sitzt das Gipsmodell auf dem Sockel 1 und kann nach Zurückziehen der Riegel 15 von diesem leicht gelöst werden, weil die konische Form der Stifte 10 sowie der Außenwand 3 ein Festkleben des Gipses nicht zulassen. Das gelöste Gipsmodell kann jetzt zersägt werden und die erhaltenen Teile können wieder beliebig oft reponiert werden, wobei Platzverwechslungen infolge der Stellung der beiden Reihen 8 und 9 gegeneinander und der unterschiedlichen Abstände der Stifte 10 zueinander nicht möglich sind.

Zur Herstellung eines weiteren Gebiss-Modelles aus Gips oder eines Modelles aus einer feuerfesten Keramikmasse wird auf den das Gipsmodell tragenden Sockel 1 der Abgußkasten 32 aufgesetzt und mit den Kopfschrauben 43 dort befestigt. Durch die Einfüllöffnungen 38 kann jetzt Abformmasse eingefüllt werden, die sich in den Erweiterungen 40 verankert. Nach deren Erstarren und nach Entfernen des Gebiss-Modelles zusammen mit dem Sockel 1 läßt sich das erhaltene Negativ mit Gips oder Keramikmasse ausgießen, in die ein zweiter Sockel mit seinen Stiften eingedrückt wird.

Zur vorübergehenden Befestigung des das Gipsmodell tragenden Sockels 1 in einem Artikulator (nicht dargestellt) dienen die eine genaue Ausrichtung nach der Seite gewährleistenden Paßnuten in Verbindung mit der ferromagnetischen Platte 27, welcher ein Permanentmagnet im Artikulator gegenüber steht.

Am Boden 2 des Sockels 1 kann ein konisches, einsetzbares Kernteil 44 (in Figur 5 mit Strichlinien angedeutet) vorgesehen sein, welches herausgenommen wird, wenn der Gaumen freibleiben soll. Dieses Kernteil 44 sitzt in einer Vertiefung des Bodens 2.

**Patentansprüche**

1. Sockel zur Halterung des Gipsmodells eines Zahnkranzes bei der Anfertigung von Zahnersatzteilen, mit einem Boden (2), einer vom Rand des Bodens aufragenden, umlaufenden, an die Form des Zahnkiefers angepaßten Außenwand (3) sowie innerhalb der Außenwand vom Boden aufragenden, im wesentlichen der Form eines Zahnkiefers folgenden Führungselementen zur lösbaren Aufnahme eines zersägbaren Gipsmodells, dadurch **gekennzeichnet,** daß als Führungselemente wenigstens zwei U-förmig gekrümmte und zur Innenseite (11) der Außenwand (3) sowie untereinander parallele Reihen (8,9) von im Abstand einander folgenden, konischen Stiften (10) vorgesehen sind.

2. Sockel nach Anspruch 1, dadurch **gekennzeichnet,** daß die Abstände zwischen den Stiften (10) einer Reihe (8) gleich sind.

3. Sockel nach Anspruch 1 oder 2, dadurch **gekennzeichnet,** daß die Außenwand (3) an ihrer Innenseite (11) parallele Führungsnuten (13) aufweist, die senkrecht zum Boden (2) stehen.

4. Sockel nach einem der Ansprüche 1 bis 3, dadurch **gekennzeichnet,** daß die Innenseite (11) der Außenwand (3) in einem Winkel (14) von etwas mehr als 90° zum Boden (2) steht.

5. Sockel nach einem der Ansprüche 1 bis 4, dadurch **gekennzeichnet,** daß an der Unterseite (24) des Bodens (2) Paßnuten (25) vorgesehen sind.

6. Sockel nach einem der Ansprüche 1 bis 5, dadurch **gekennzeichnet,** daß an der Unterseite (24) des Bodens (2) eine Platte (27) aus ferromagnetischem Material angeordnet ist.

7. Sockel nach einem der Ansprüche 1 bis 6, dadurch **gekennzeichnet,** daß an der Krone (29) der Außenwand (3) Paßmittel (31) vorgesehen sind.

8. Sockel nach einem der Ansprüche 1 bis 7, **gekennzeichnet** durch einen auf die Krone (29) der Außenwand (3) mit einer Seitenwand (34) aufsetzbaren und mit einem angeformten Deckel (33) versehenen Abgußkasten (32).

9. Sockel nach Anspruch 8, dadurch **gekennzeichnet,** daß die Seitenwand (34) des Abgußkastens (32) mit den Paßmitteln (31) des Sockels (1) korrespondierende Paßmittel (37) aufweist.

**Claims**

1. Base for supporting the plaster model of a set of teeth in the preparation of tooth replacement parts, having a bottom part (2), an outer wall (3), which projects from the edge of the bottom part, extends all around and is adapted to the shape of the dental arch, as well as guide elements inside the outer wall which project from the bottom part and substantially follow the shape of a dental arch for removably accommodating a plaster model which can be sawn, characterised in that at least two rows (8, 9) of conical pins (10), which follow one another at a distance, are curved in a U-shaped manner, are parallel to the inner side (11) of the outer wall (3) as well as with respect to one another are provided as guide elements.

2. Base according to Claim 1, characterised in that the distances between the pins (10) in any one row (8) are identical.

3. Base according to Claim 1 or 2, characterised in that the outer wall (3) comprises on its inner side (11) parallel guide grooves (13) which are perpendicular to the bottom part (2).

4. Base according to any one of Claims 1 to 3, characterised in that the inner side (11) of the outer wall (3) is at an angle (14) of somewhat more than 90° relative to the bottom part (2).

5. Base according to any one of Claims 1 to 4, characterised in that fitting grooves (25) are provided on the lower side (24) of the bottom part (2).

6. Base according to any one of Claims 1 to 5, characterised in that a plate (27) of ferromagnetic material is disposed on the underside (24) of the bottom part (2).

7. Base according to any one of Claims 1 to 6, characterised in that fitting means (31) are provided on the crown (29) of the outer wall (3).

8. Base according to any one of Claims 1 to 7, characterised by a casting box (32) which can be mounted on the crown (29) of the outer wall (3) with a side wall (34) and is provided with a lid (33) formed thereon.

9. Base according to Claim 8, characterised in that the side wall (34) of the casting box (32) comprises fitting means (37) corresponding to the fitting means (31) of the base (1).

**Revendications**

1. Socle pour supporter le modèle en plâtre d'une dentition lors de la réalisation de prothèses dentaires, comprenant un fond (2), une paroi extérieure (3) continue, s'étendant vers le haut à partir du bord du fond et adaptée à la forme de la mâchoire, ainsi que des éléments de guidage pour la réception amovible d'un modèle en plâtre sciable qui se dresse sur le fond à l'intérieur de la paroi extérieure en suivant sensiblement la forme d'une mâchoire, **caractérisé en ce** qu'il est prévu comme éléments de guidage au moins deux rangées (8, 9) de broches coniques (10) courbées en U et se suivant à distance les unes des autres, qui sont disposées parallèlement à la face intérieure (11) de la paroi extérieure (3) ainsi que les unes par rapport aux autres.

2. Socle selon la revendication 1, caractérisé en ce que les distances entre les broches (10) d'une rangée (8) sont identiques.

3. Socle selon l'une des revendications 1 ou 2, caractérisé en ce que la paroi extérieure (3) présente sur la face intérieure (11) des rainures de guidage (13) qui sont orientées perpendiculairement au fond (2).

4. Socle selon l'une des revendications 1 à 3, caractérisé en ce que la face intérieure (11) de la paroi extérieure (3) forme avec le fond (2) un angle (14) légèrement supérieur à 90°.

5. Socle selon l'une des revendications 1 à 4, caractérisé en ce que des rainures d'ajustage (25) sont prévues sur la face intérieure (24) du fond (2).

6. Socle selon l'une des revendications 1 à 5, caractérisé en ce que sur la face inférieure (24) du fond (2) est disposée une plaque (27) réalisée en un matériau ferromagnétique.

7. Socle selon l'une des revendications 1 à 6, caractérisé en ce que des moyens d'ajustage (31) sont prévus sur la couronne (29) de la paroi extérieure (3).

8. Socle selon l'une des revendications 1 à 7, caractérisé en ce qu'il comprend une boîte de moulage (32) pouvant être posée avec une paroi latérale (34) sur la couronne (29) de la paroi extérieure (3) et munie d'un couvercle (33) surmoulé.

9. Socle selon la revendication 8, caractérisé en ce que la paroi latérale (34) de la boîte de moulage (32) comporte des moyens d'ajustage (37) correspondant aux moyens d'ajustage (31) du socle (1).

**Fig.1**

**Fig.2**

**Fig. 3**

**Fig. 4**

**Fig. 5**